# EUROPEAN PATENT APPLICATION

(11) **EP 2 982 970 A1**
(43) Date of publication of application: **10.02.2016**
(21) Application number: 14194827.3
(22) Date of filing: 25.11.2014
(51) Int. Cl.: G01N 23/04

(54) **COMPUTER TOMOGRAPHY FOR DETERMINING PHYSICAL PARAMETERS OF AN OBJECT**

(30) Priority: 04.08.2014 PL 40909214
(71) Applicant: Uniwersystet Slaski w Katowicach, 40-007 Katowice (PL)
(72) Inventor: Binkowski, Marcin, 40-175 Katowice (PL)
(74) Representative: Rumpel, Alicja

(57) **Abstract**

The core of the invention lies in a method of determination of physical parameters of the object (3) imaged using computer tomograph, in particular determination of absolute parameters of physical density and/or X-ray absorption coefficient, wherein the reference (2) of the determined physical parameters is installed between the X-ray source (4) and the detector (1) or, advantageously, directly on the detector (1), outside the rotating tomograph platform where the scanned object (3) is placed, followed by object scanning, during which the images of tomographic projections record simultaneously the two-dimensional image of the studied object and the two-dimensional image of the reference, where for at least one projection for at least one reference area the value of image greyscale intensity is performed in relative units by readout of pixel value from the projection image, which reflects the X-ray radiation intensity in greyscale after passing through the scanner chamber and the reference, and the obtained results are used as a basis for calculations of coefficients of calibration function, preferably using linear regression, then the calibration function is substituted with a variable, namely the value determined from the pixel value from the projection image, which reflects the intensity of X-rays in greyscale after passing through the scanner chamber and the scanned object and the value of calibration function is calculated, reflecting the value of the physical parameter and it is stored, preferably in the same pixel in the projection, then on the basis of thus determined projection a computer image reconstruction takes place, the result of which represents in the absolute scale values of the determined physical parameter.

The core of the invention is also contained in the equipment for using this method.

## Description

The subject of the invention includes method of determination of physical parameters, in particular determination of absolute parameters of physical density and/or X-ray radiation absorption coefficient of the studied object imaged using a computer tomograph and equipment for implementation of said method.

The X-ray computer tomography method comprises of recording so called tomographic projections which form the basis of computer reconstruction, aimed at obtaining two-dimensional images showing cross-sections of the studied object. These cross-sections may then be used as basis for computer reconstruction of a three-dimensional shape of the studied object. Both two-dimensional cross-sections and the reconstructed three-dimensional shape image the density using Hounsfield scale, which defines the level of radiation absorption within the scanned object. This scale is usually visualised as greyscale in which the lowest intensity, for example white colour, denotes the maximum and the lowest intensity, for example the black colour, denotes minimum absorption level of X-ray radiation in the given range, The absorption level value expressed in so called Hounsfield units for tissue was determined as an absolute reference value for properties of X-ray radiation absorption by water. The Hounsfield scale or any other greyscale, provides the options of imaging the given object at level adequate for imaging diagnostics. However, this method offers no possibility of determination of qualitative and absolute value of imaged density of the studied object and of practical evaluation of this value.

Quantitative evaluation of physical density may take place on the basis of the aforementioned methodology improved by using a density reference.

If the study involves using a reference which is scanned in a separate test before/after scanning the tested object, there still exists a problem influencing calculation accuracy, caused by the possibility of drifting parameters of the measurement system, namely parameters of the X-ray source and detector and imperfections of tomographic reconstructions performed using methods characterised by certain inaccuracy.

The solution disclosed in patent PL213008 partially enabled to eliminate the aforementioned problem by scanning a phantom (reference) simultaneously with the studied object, however, there still existed a problem related to size and position of the phantom limited, inter alia, by sample sizes, required magnification factor or scanner chamber size. Presence of the reference within the scanning area and its design limit the possibility of obtaining the optimal, which is usually also the largest, zoom of image of the studied object.

Solutions known in the art, including those disclosed in the PL213008 patent, do not work well in case of use of automatic algorithm for correction of the radiation hardening effect, in case of non-uniform structure of the scanned object and in case of scanner parameters drift.

Quantitative tomography methods known in the art do not enable this problem to be fully solved, for example, the PL213008 solution observed increased risk of mutual motion between the studied object and the reference. This motion results in sharpness drop of the reconstructed reference or object image, and thus renders the image useless and causes the scanning process to be repeated. The disadvantage of this solution also includes the necessity of fitting both the studied object and the reference within the imaging field, which results in lower imaging resolution, sometimes even reduced by 30%.

The disclosures presented in US4782502A and US4870666A reveal a calibration reference for computer tomography, which can be placed directly on the body of the patient. The disadvantage of this solution lies in the risk of motion and design adjusted mainly for clinical scanners.

The disclosure presented in US4663772A presents reference for bone density analysis, the geometry of which represents bodily characteristics of the patient, soft tissue is simulated by filling the interior of the reference with water, and bone tissue is represented by a cylinder made of material with density similar to that of bone tissue. Reference sizes enable its use for calibration of tomography equipment, but do not ensure the possibility of simultaneous measurement of bone density, e.g. of the patient.

The disclosure presented in JP2003116830 presents a reference made for tomographic equipment with water chamber, which also shows the aforementioned disadvantages.

The disclosure presented in CN102940503 (A) presents a reference for use in dentistry tomography and jaw density evaluation. The disadvantage of its use also lies in design aimed for placing in the vicinity of the reconstructed object.

The disclosure presented in CN102917641 (A) presents a device and reference used for tomography imaging. As it was mentioned above, this solution is also placed in the vicinity of the reconstructed object.

The goal of this invention is to create the possibility of practical, quantitative determination of physical parameters, in particular of physical density and the X-ray absorption factor for the studied object using computer tomography, including microtomography and nanotomography.

This task was solved by development of a method for determination of physical parameters of the object imaged using computer tomograph, in particular determining absolute parameters of physical density and/or X-ray radiation absorption coefficient, as well as development of a system with characteristic reference of the determined parameters, first and foremost proper reference positioning within the scanner chamber, enabling implementation of this method. The idea behind the invention lies in the fact that a reference of the determined physical parameters is installed between the X-ray source and the detector or, advantageously, directly on the detector, outside the rotating tomograph platform where the scanned object is placed, followed by object scanning, during which the images of tomographic projections record simultaneously the two-dimensional image of the studied object and the two-dimensional image of the reference, where for at least one projection for at least one reference area the value of image greyscale intensity is performed in relative units by readout of pixel value from the projection image, which reflects the X-ray radiation intensity in greyscale after passing through the scanner chamber and the reference, and the obtained results are used as a basis for calculations of coefficients of calibration function, preferably using linear regression, then the calibration function is substituted with a variable, namely the value determined from the pixel value from the projection image, which reflects the intensity of X-rays in greyscale after passing through the scanner chamber and the scanned object and the value of calibration function is calculated, reflecting the value of the physical parameter and it is stored, preferably in the same pixel in the projection, them of thus determined projection a computer image reconstruction takes place, the result of which represents in the absolute scale values of the determined physical parameter.

Preferably, the reference is installed in such a manner that its position in relation to the detector remains constant.

The idea behind the invention also lies in the system for determination of physical parameters of an object imaged using computer tomograph containing the X-ray source and detector, in particular in the form of a flat panel detector, and a reference of determined physical parameters of the scanned object, in particular its density and the X-ray absorption coefficient characterised in that the reference of the determined physical parameters is installed between the X-ray source and detector, preferably directly on the detector, outside the rotating platform of the tomograph where the scanned object is placed, in such a way that the X-ray image of the reference was contained in the projection image recorded during image scanning, where the reference is formed of a batten in which at least one opening running or not through the batten is provided, preferably a cylindrical opening, filled with material forming the determinant of the determined physical parameter, enabling direct or indirect determination of the physical parameter value within the scanned object.

Preferably, the reference is installed in such a way that it remains immobile in regards to the detector.

Preferably, the reference is equipped with a tight enclosure of at least one opening.

Preferably, the material forming the determinant of the determined physical parameter has a different X-ray absorption coefficient than the base material of the reference batten, which enables its image in the projection image to be distinguished.

Preferably, the material forming the determinant of the determined physical parameter introduced into the opening/openings of the reference has the form of permanent bar/bars, enabling its easy replacement according to measurement requirements. If the reference has more bars, they may be made of a material with different values of physical parameters, which enables use of bigger number of points for determination of the reference curve. The bars used may be made of a mixture of the same material with different ratio of components, resulting in obtaining bars with different values of physical parameters, e.g. physical density, or they may be made of a uniform, solid material, but every bar may contain different material, thus resulting in different values of physical parameters for every bar. The material may also differ with its structure, comprising reference value, e.g., with defined porosity.

Preferably, the material comprising determinant of the determined physical parameter introduced into the reference opening(s) has the form of a liquid or a gas.

The shape and material used for reference design may be any, depending on the scanner design, irradiated sample, etc. Its design should take into account obtaining two or more values of X-ray radiation absorption, which are then used to calculate the calibration curve.

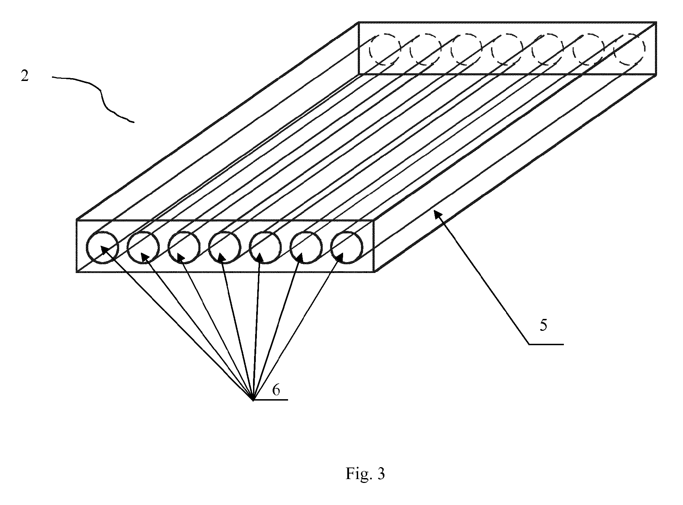

The subject of the invention is depicted as an embodiment in the drawing, in which fig. 1, presents example diagram of the system for determination of physical parameters of the studied object imaged using computer tomograph, fig. 2 presents an axonometric view of the reference for determined physical parameters of the studied object, with one through opening filled with material forming the determinant of the determined physical parameter, whilst fig. 3 - presents an axonometric view of the reference for determined physical parameters of the studied object, with seven through openings filled with material forming the determinant of the determined physical parameter.

### Example 1.

The system for determination of physical parameters of the tested object imagined using computer tomograph equipped with characteristic reference of physical density of bone tissue, with a single opening.

The system comprises of **4** X-rays source, flat panel detector **1** of X-ray radiation and reference of the **2** determined physical parameters of the scanned object **3,** in particular of its physical density and the X-ray absorption coefficient.

The main design element of the reference **2** comprises a batten **5,** inside which a cylindrical through opening is formed **6.** Inside the opening **6** a cylindrical bar and with diameter adjusted to diameter of opening **6** in the batten is placed. The important part includes material, out of which reference **2**has been made. The batten **5** is made of polymethacrylate resin (PMMA), with physical density of ca. 1.13 mg/ccm, i.e. similar to density of soft tissues made mostly of water. The bar is made of a mixture of a resin and synthetic hydroxyapatite HA, material with physical density of ca. 3.175 mg/ccm i.e. hydroxyapatite density, which forms the main ingredient of bone tissue. Weight ratio for both materials is selected in such a wary that the net physical density is equal to 1.39 mg/ccm. The reference **2** is placed directly on the detector **1,** in such a manner that it is immobile in regards to the detector, and the studied object **3** is placed on the rotating platform in such a manner that the X-ray image of reference **2** is contained within the projection image recorded during scanning of object **3.** Then the scanning of object **3** takes place, during which the tomography image projections record simultaneously the two-dimensional image of the studied object **3** and the two-dimensional image of the reference **2.**

### Example 2.

The system for determination of physical parameters of the tested object imagined using computer tomograph equipped with characteristic reference of physical density of bone tissue, with seven openings.

The system comprises of **4** X-rays source, flat panel detector **1** of X-ray radiation and reference **2** of the determined physical parameters of the scanned object, in particular of its physical density and the X-ray absorption coefficient.

The main design element of the reference **2** comprises a batten **5,** inside which, along the length of the batten and parallel to one another, seven cylindrical through openings are formed **6.** Inside the openings **6** seven cylindrical bars with diameter adjusted to diameter of openings **6** in the batten are placed. Batten **5** is made of polymethacrylate resin (PMMA), which has the mineral density of bone tissue equal to 0. Bars are made of a mixture of a resin and synthetic hydroxyapatite HA. Weight ratios of the mixture of both materials are selected in such a way that the net mineral density is equal to 50, 100, 200, 400, 800, 1000, 1200 mgHA/ccm, respectively. Reference **2** is placed directly on the detector **1,** and the studied object **3** on the rotating platform. Then the scanning of object **3** takes place, during which the tomography image projections record simultaneously the two-dimensional image of the studied object **3** and the two-dimensional image of the reference **2.**

### Example 3.

### Method for determination of X-ray absorption of the studied object imaged using computer tomograph.

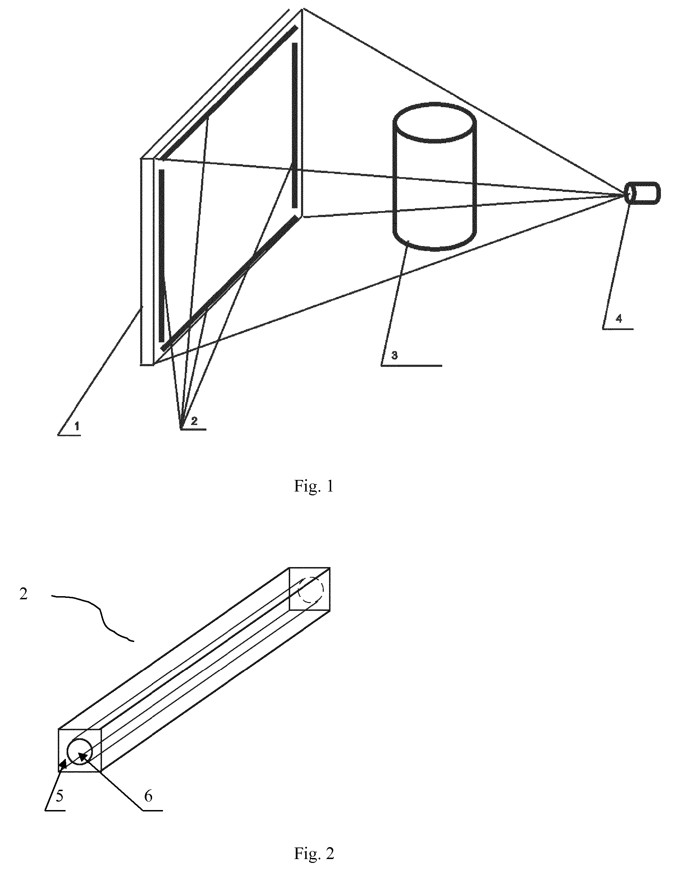

The studied object **3** is scanned using a tomograph equipped with reference **2** of determined physical parameters, which is the reference representing determined value of X-ray absorption coefficients for water and the studied object made of bone tissue. The reference **2** is installed directly on the detector **1,** outside the rotating platform of the tomograph on which the scanned object **3** is placed. Then the scanning of object **3**takes place, during which the tomography image projections record simultaneously the two-dimensional image of the studied object **3** and the two-dimensional image of the reference **2.** For projections recorded in the batten area **5** of reference **2** and in the area of opening **6** (fig. 2) the value of greyscale intensity in relative units is read by reading out the pixel from the projection image, which in the greyscale reflects the relative value of X-ray radiation intensity after passing through scanner chamber and reference **2,** and on the basis of the obtained results, coefficients of the calibration function are calculated using linear regression, then the calibration function is substituted with the variable value determined by readout of a pixel from the projection image, which reflects in the greyscale the intensity of X-ray radiation after passing through the scanner camber and the scanned object**3** and the value of calibration function forming the value of absorption coefficient is calculated and stored in the projection, then, for thus determined projections, using the standard method applied in the particular tomograph type, computer reconstruction of the image showing distribution of the X-ray absorption coefficient in the absolute scale is performed.

### Example 4.

### Method for determination of physical density of the studied object imaged using computer tomograph.

Physical density is evaluated in a manner similar to the method presented above. In this case, reference **2** of determined physical parameters is a reference representing determined values of physical density for water and for the studied object, e.g. bone tissue. The remaining measurement stages progress identically, with the image reconstruction resulting in a layered image representing density distribution within the tested object **3.**

Method and layout according to the invention have the following characteristics and advantages: They enable determination of a specific value of absorption coefficient, or physical density, or value of physical parameter, e.g. porosity, etc., of the studied object imaged using computer tomography. It ensures use of damping coefficient for determination of equation of the curve enabling calculation of absorption coefficient, or physical density, or physical parameter value, e.g. porosity, etc., on the basis of image obtained from computer tomography. It eliminates errors in density evaluation, arising as a result of imperfection of layered image reconstruction algorithms from the projections. It also enables evaluation of mineral density, in the entire volume of the studied object, which forms an additional advantage of the invention when determining quantitative and qualitative parameter, possibly enabling elimination of necessity of performing a density measurement. In addition, by adjusting the reference size, this method may be successfully used in tests with resolution higher than that of computer tomography, for example, in microtomograpy or even nanotomography.

The solution enabled elimination of the risk of relative motion between the tested object and the reference, which in case of solutions known in the art resulted in blur of the reconstructed reference or object image, rendering it useless and making it necessary to repeat the scanning.

The advantage of the solution lies in the fact of performing the calibration before the stage of the tomographic reconstruction, thanks to which the reconstructed image is immediately the image representing distribution of physical parameters of the object in absolute scale.

In the solution known in the art, according to the patent PL213008 the reference image is recorded in every layer, and in the solution according to this invention, the reference image is present only in the projection images and it is absent in all layered images. It enables limiting the file size before results are recorded, elimination of relative motion risk between the object and the reference during scanning, makes it easier to install the object on the scanner platform.

## Claims

1. The method of determination of physical parameters of the object imaged using computer tomograph, in particular determination of absolute parameters of physical density and/or X-ray absorption coefficient, **characterised in that** the reference (2) of the determined physical parameters is installed between the X-ray source (4) and the detector (1) or, advantageously, directly on the detector (1), outside the rotating tomograph platform where the scanned object (3) is placed, followed by object scanning, during which the images of tomographic projections record simultaneously the two-dimensional image of the studied object and the two-dimensional image of the reference, where for at least one projection for at least one reference area the value of image greyscale intensity is performed in relative units by readout of pixel value from the projection image, which reflects the X-ray radiation intensity in greyscale after passing through the scanner chamber and the reference, and the obtained results are used as a basis for calculations of coefficients of calibration function, preferably using linear regression, then the calibration function is substituted with a variable, namely the value determined from the pixel value from the projection image, which reflects the intensity of X-rays in greyscale after passing through the scanner chamber and the scanned object and the value of calibration function is calculated, reflecting the value of the physical parameter and it is stored, preferably in the same pixel in the projection, them of thus determined projection a computer image reconstruction takes place, the result of which represents in the absolute scale values of the determined physical parameter.

2. Method according to claim. 1, **characterised in that** the reference (2) is installed in such a manner that its position in relation to the detector (1) remains constant.

3. System for determination of physical parameters of an object imaged using computer tomograph containing the X-ray source and an X-ray detector, in particular in the form of a flat panel detector, and a reference of determined physical parameters of the scanned object, in particular its density and the X-ray absorption coefficient **characterised in that** the reference (2) of the determined physical parameters is installed between the X-ray source (4) and detector (1), preferably directly on the detector (1), outside the rotating platform of the tomograph where the scanned object (3) is placed, in such a way that the X-ray image of the reference (2) was contained in the projection image recorded during image scanning of the object (3), where the reference (2) is formed of a batten (5) in which at least one opening (6) running or not through the batten is provided, preferably a cylindrical opening, filled with material forming the determinant of the determined physical parameter, enabling direct or indirect determination of the physical parameter value within the scanned object.

4. System according to claim 3, **characterised in that** the reference (2) is installed in such a manner that its position in relation to the detector (1) remains constant.

5. System according to claim 3, **characterised in that** the reference (2) is equipped with tight closure of at least one opening (6).

6. System according to claim 3, **characterised in that** the material forming the determinant of the determined physical parameter has a different X-ray absorption coefficient than the base material of the reference (2) batten, which enables its image in the projection image to be distinguished.

7. System according to claim 3, **characterised in that** the material forming the determinant of the determined physical parameter introduced into the opening/openings (6) of the reference (2) has the form of permanent bar/bars, enabling its easy replacement according to measurement requirements.

8. System according to claim 3, **characterised in that** the material comprising determinant of the determined physical parameter introduced into the reference opening(s) (6) of the reference (2) has the form of a liquid or a gas.
